# FASCICULE DE BREVET EUROPEEN

(11) **EP 0 713 611 B1**
(45) Date de publication et mention de la délivrance du brevet: **20.10.1999**
(21) Numéro de dépôt: 95923390.9
(22) Date de dépôt: 15.06.1995
(51) Int. Cl.: H01Q 1/12

(54) **VITRAGE ANTENNE**
SCHEIBENANTENNE
IN-GLASS ANTENNA

(30) Priorité: 15.06.1994 DE 4420903
(43) Date de publication de la demande: 29.05.1996
(73) Titulaire: SAINT-GOBAIN VITRAGE, 92400 Courbevoie (FR)
(72) Inventeur: SAUER, Gerd, D-52224 Stolberg (DE)
(74) Mandataire: Breton, Jean-Claude
(86) Numéro de dépôt international: FR9500787
(87) Numéro de publication internationale: WO9534921

(56) Documents cités:
- DE-A- 3 834 075
- FR-A- 2 533 765
- IEEE TRANSACTIONS ON ANTENNAS AND PROPAGATION, vol. 42, no. 2, Février 1994 NEW YORK US, pages 260-264, XP 000435752 CHEN ET AL. 'Superstrate Loading Effects on the Circular Polarization and Crosspolarization Characteristics of a Rectangular Microstrip Patch Antenna'
- ELECTRONICS LETTERS, vol. 28, no. 1, 2 Janvier 1992 STEVENAGE GB, pages 17-19, XP 000278930 AFZALZADEH ET AL. 'X-BAND DIRECTIVE SINGLE MICROSTRIP PATCH ANTENNA USING DIELECTRIC PARASITE'
- IEEE ANTENNAS AND PROPAGATION MAGAZINE, vol. 35, no. 1, Février 1993 NEW YORK US, pages 14-38, XP 000303381 DUBOST ET AL. 'Research on planar antennas and "Structures Rayonnantes"'

## Description

L'invention a trait à un vitrage antenne constitué d'un élément d'antenne et d'une contre-électrode reliée à la masse. L'élément d'antenne se trouve sur la face tournée vers l'extérieur d'un premier diélectrique plat, à l'intérieur du vitrage, tandis que la contre-électrode est située sur la face opposée de ce premier diélectrique. Un second diélectrique, doté d'une constante diélectrique (ou permittivité) inférieure à celle du verre, est disposé entre l'élément d'antenne et la face extérieure du vitrage antenne.

Ce type d'antennes convient pour l'émission ou la réception d'ondes radio dans la gamme des micro-ondes dont les fréquences excèdent 300 MHz. On peut les employer comme antennes fixes ou pour des véhicules, en particulier pour les communications radiotéléphoniques du réseau numérique, pour les communications radios numériques par satellite, ou en tant qu'antenne réceptrice pour les systèmes de télédétection par satellite, tels que le GPS (Global Position System), qui permettent de localiser la position d'un véhicule, où qu'il soit. Pour qu'elles fonctionnent correctement, il faut limiter leur activité à une étroite bande de fréquences et les règler avec une grande précision. Elles doivent aussi pouvoir conserver cette capacité lorsque l'environnement est une source de parasites. C'est pourquoi il convient de les garder propres et aussi de les protéger des facteurs extérieurs de perturbation ou d'atténuation.

Selon un type d'antenne décrit dans le brevet DE 38 34 075 A1, un second diélectrique est disposé entre l'élément d'antenne et la face extérieure du panneau, afin de réduire les influences de l'environnement sur l'élément d'antenne.

Dans le cas d'un tel vitrage antenne, il est possible que le second diélectrique soit fait de matériaux différents. Selon un premier exemple, c'est le polyvinylbutyral, servant à relier les différentes feuilles d'un vitrage feuilleté, qui fera office de second diélectrique. Dans un autre exemple, le second diélectrique sera une plaque de matière plastique à surface étendue que l'on pose sur l'élément d'antenne. Ce document mentionne en outre un exemple pour lequel le second diélectrique occuperait une région évidée de la feuille de verre externe d'un vitrage feuilleté. Pour tous les exemples évoqués, le vitrage antenne est mis en contact mécanique direct, et ce sur toute sa surface orientée vers l'extérieur, avec une pièce massive façonnée à partir du second matériau diélectrique.

Ce type bien connu de structure d'antenne présente encore une certaine vulnérabilité aux influences de l'environnement et peut être perturbé en particulier lorsque la feuille de verre est mouillée par l'eau de pluie ou par l'humidité atmosphérique.

L'invention a pour objectif de réaliser une version améliorée d'un vitrage antenne du type mentionné, dont la fréquence de résonance serait encore moins altérée par l'humidité présente sur le panneau, et d'atteindre ainsi un bon degré d'efficacité et une forte atténuation des canaux voisins pour les antennes à bande de fréquences étroite.

Cet objectif est atteint selon l'invention par un vitrage antenne dans lequel l'élément d'antenne est séparé, de la face orientée vers l'intérieur d'une feuille de verre formant le vitrage antenne, par une couche d'air formant un second diélectrique.

L'invention prévoit donc de construire le vitrage antenne de manière qu'une couche d'air se trouve entre la feuille de verre externe et l'élément d'antenne.

Ainsi, l'élément d'antenne est encore mieux isolé de l'humidité, avec laquelle le côté extérieur de la feuille de verre est en contact et qui est une source de perturbation particulièrement forte, ainsi que des dépôts qui peuvent causer une atténuation.

L'élément d'antenne peut aussi bien être placé, conformément à l'invention, sur un vitrage monolithique que sur un vitrage feuilleté.

Une réalisation adaptée d'un vitrage antenne conforme à l'invention et fait d'un vitrage feuilleté comptant au moins deux feuilles de verre jointes par une feuille thermoplastique, a pour particularité une couche d'air formée par la région évidée de la feuille thermoplastique.

Un premier type de réalisation peut être façonné de manière que l'élément d'antenne soit placé, à l'intérieur de la région évidée de la feuille thermoplastique, sur la face orientée vers l'extérieur de la feuille de verre interne, à l'intérieur du panneau. Pour cette structure, la feuille interne du vitrage feuilleté forme le premier matériau diélectrique, entre l'élément d'antenne et la contre-électrode.

Un autre mode de réalisation, pour lequel la couche d'air est formée par l'évidage de la feuille thermoplastique, peut être réalisé de manière que l'élément d'antenne soit placé sur la face de la feuille interne qui est tournée vers l'intérieur (i.e vers l'habitacle du véhicule). Ce procédé a l'avantage de faciliter grandement la fabrication du vitrage antenne. Il est certes nécessaire d'évider la feuille thermoplastique lors de la fabrication du vitrage feuilleté, mais le montage de l'élément d'antenne, sur la face intérieure de la feuille de verre interne, peut-être fait bien après la phase d'assemblage du vitrage feuilleté.

Alors qu'il est nécessaire, pour les vitrages antennes connus, d'appliquer sur les deux côtés de la feuille de verre à surface étendue une structure conductrice d'électricité, l'invention permet d'installer la plaque conductrice de l'antenne, le diélectrique, pris entre celle-ci et la contre-électrode et ladite contre-électrode sur un seul côté de la feuille de verre.

La fabrication de la structure d'antenne peut s'effectuer de différentes manières, par exemple au moyen d'un écran de soie. Mais il est particulièrement approprié de coller, dans la région évidée de la feuille thermoplastique, sur la face orientée vers l'intérieur de la feuille de verre interne, une pièce préfabriquée à couches multiples qui porte la structure de l'antenne.

Une réalisation préférée d'un vitrage antenne, selon l'invention, présente la particularité suivante: L'élément d'antenne est relié à la face intérieure de la feuille interne par un espaceur. Ainsi, une couche d'air est formée entre la feuille interne et la pièce d'antenne, qui est constituée de l'élément d'antenne, du premier diélectrique et de la contre-électrode qui y est reliée. De cette façon, toutes les parties de l'antenne responsables de la qualité de réception sont isolées, dans l'espace, par un matériau diélectrique, ce qui permet de les protéger des influences perturbantes de l'environnement. Selon cette réalisation, la pièce d'antenne peut être placée sur un vitrage monolithique. Dans le cas d'un vitrage feuilleté, cette réalisation préférée peut, encore une fois, présenter une région évidée dans le matériau thermoplastique, à l'emplacement de l'élément d'antenne, et ainsi rendre l'isolation encore plus efficace, la couche d'air étant doublée.

L'espaceur et la structure d'antenne peuvent être un élément préfabriqué que l'on place sur la feuille de verre prévue pour être du côté intérieur. Cela permet un montage particulièrement simple et rapide de la structure d'antenne sur la feuille de verre. Ce modèle offre en outre une protection totale de l'élément d'antenne vis-à-vis des influences perturbantes de l'environnement et assure ainsi une stabilité de fréquence optimale.

La forme et les dimensions de la plaque conductrice de l'antenne et de la contre-électrode sont adaptées aux fréquences d'émission et de réception employées, ainsi qu'à l'état de polarisation des ondes. Cela signifie que la plaque conductrice aura la forme d'une bande étroite dans le cas d'ondes polarisées de manière rectiligne, tandis qu'elle présentera une forme plate et de dimensions égales dans toutes les directions, s'il s'agit d'ondes polarisées de manière circulaire, comme c'est le cas pour le système GPS. L'emplacement du pied d'antenne est choisi en fonction de l'impédance souhaitée pour le pied d'antenne. Pour les fréquences utilisées, les dimensions des plaques conductrices d'antenne sont de l'ordre de quelques centimètres. Les dimensions de la contre-électrode doivent être, quant à elles, nettement supérieures à celles de la plaque conductrice, quel que soit le cas envisagé.

D'autres avantages, ainsi que des réalisations adaptées et des perfectionnements de l'invention sont développés dans les revendications, ainsi que dans la description d'exemples de réalisation faite en référence aux figures qui représentent:
- Figure 1 -: une vue en coupe d'un vitrage feuilleté pourvu d'un élément d'antenne placé entre les deux feuilles de verre,
- Figure 2 -: une vue en coupe d'un vitrage feuilleté doté d'une structure d'antenne disposée sur le côté intérieur,
- Figure 3 -: une vue en coupe d'un vitrage monolithique doté d'une structure d'antenne maintenue séparée de celui-ci.

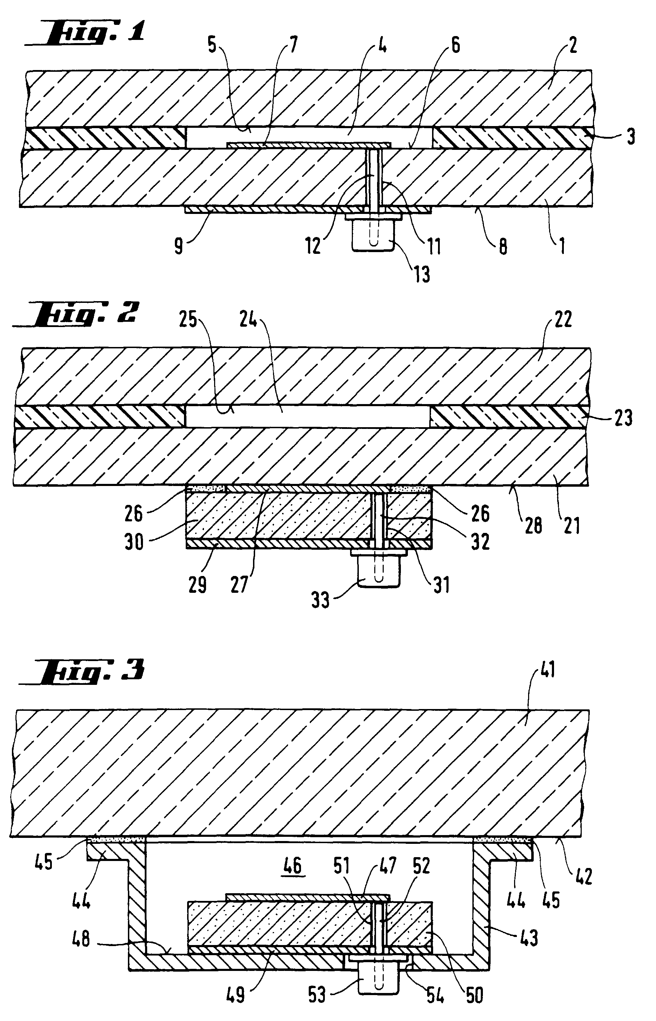

Le vitrage feuilleté représenté en coupe dans la figure 1 consiste en deux feuilles de verre 1 et 2, épaisses de 2 mm chacune et assemblées au moyen d'une feuille thermoplastique 3 de 0,76 mm faite, par exemple, de polyvinylbutyral. Après installation du vitrage feuilleté dans un bâtiment ou un véhicule, la feuille 2 se trouvera à l'extérieur. La feuille thermoplastique 3 comporte, dans une de ses parties, une région évidée 4. Un élément d'antenne métallique 7 est disposé, dans cette région évidée 4, sur la face 6 de la feuille interne 1 qui est orientée vers l'extérieur, à l'intérieur du panneau. L'air contenu dans la région évidée 4 constitue un diélectrique idéal, avec une constante diélectrique (ou permittivité relative) εr = 1,0006. Cet espace intermédiaire, rempli d'air et correspondant à la région évidée 4, entre l'élément 7 et la face intérieure 5 de la feuille de verre 2, forme le second diélectrique. Une contre-électrode métallique 9 est installée sur la surface intérieure 8 de la feuille 1. L'élément d'antenne 7 et la contre-électrode 9 peuvent être constitués d'une couche d'émail, appliquée au moyen d'un écran de soie puis cuite, et qui soit conductrice d'électricité. L'élément d'antenne 7 est relié à un circuit électronique (qui n'est pas représenté ici) au moyen d'une fiche de contact 12, qui traverse la feuille 1 par le trou 11 et qui sert de jonction avec un élément de raccord de câble coaxial. La pièce de raccordement tubulaire 13 de la contre-électrode 9 se trouve sur la gaine du câble.

Le trou 11 peut également servir à égaliser la pression à l'intérieur de la région évidée 4, lorsque l'on assemble les feuilles de verre 1-2 et la feuille thermoplastique 3 par échauffement et pression, et ainsi parer le risque de voir les feuilles de verre détruites, en cet endroit, par une haute pression.

Le vitrage feuilleté représenté sur la figure 2 est constitué de deux feuilles 21 et 22 de verre jointes au moyen d'une feuille thermoplastique 23. La feuille 22 se trouve à l'extérieur, dans la structure du vitrage feuilleté. La feuille thermoplastique 23 est, ici encore, pourvue d'une région évidée 24. La couche d'air formée par ce vide 24 constitue le diélectrique servant à isoler la plaque conductrice d'antenne 27 de la face intérieure 25 de la feuille 22.

L'élément d'antenne 27 est disposé à l'aide d'une couche adhésive 26 sur la face intérieure 28 de la feuille 21. La contre-électrode 29 est isolée de l'élément d'antenne 27 par le diélectrique 30. Un trou 31 a été percé à travers ce même diélectrique 30. C'est par lui que passe la fiche de contact 32, qui relie l'élément d'antenne 27 à un circuit électronique d'amplification (non-représenté ici). Ce circuit peut être installé, au-dessus d'une couche isolante, sur celle des surfaces de la contre-électrode 29 qui est orientée vers l'intérieur, selon la structure du vitrage. La contre-électrode elle-même est reliée à la masse au moyen du raccord tubulaire 33 et de la gaine du câble coaxial.

Dans le cas d'un vitrage antenne monolithique tel que représenté sur la figure 3, un espaceur 43 est relié, au moyen de ses deux surfaces 44 et de deux couches adhésives 45, à la surface intérieure 42 de la feuille de verre 41. L'élément d'antenne 47, ainsi que la contre-électrode 49 sont placés sur le diélectrique 50 sous forme de couches métalliques, et constituent avec ce dernier la structure de l'antenne, qui, en tant que telle, est installée sur la paroi interne de l'espaceur 43.

La plaque conductrice d'antenne est, comme dans les exemples précédents, reliée à la prise d'un câble de connexion adapté, et ce, au moyen d'une fiche de contact 52 passant par le trou 51 percé dans le diélectrique 50, fiche qui fait office de jonction avec le raccord du câble coaxial. La pièce de raccordement 53, servant à relier la contre-électrode 49 à la masse, traverse le trou 54 dans la paroi 48 de l'espaceur 43.

Pour ce type de modèle, on a atteint une isolation optimale des composants de l'antenne vis-à-vis des influences perturbantes de l'environnement. La couche d'air 46, qui s'avère être un diélectrique idéal, isole l'élément d'antenne 47, ainsi que la contre-électrode 49 et le premier diélectrique 50, des perturbations extérieures.

Il est également possible de réaliser de plus grandes couches d'air pour ce type de modèle. Pour des écarts, entre la surface 42 de la feuille de verre et l'élément d'antenne 47, compris entre 2 et 3 mm, on peut atteindre une grande stabilité de fréquence, même en cas de perturbations extérieures très marquées.

Il est possible d'employer un gaz autre que l'air, ou bien une mousse qui soit majoritairement constituée d'air ou d'un autre gaz, pour remplir la région évidée. De telles mousses sont appropriées, en particulier si leur volume contient au minimum 95% d'air, car ainsi, leur constante diélectrique (ou permittivité relative εr) serait inférieure ou égale à 1,1.

## Revendications

1. Vitrage antenne comportant un élément d'antenne et une contre-électrode reliée à la masse, l'élément d'antenne étant placé, dans la structure du vitrage, sur la face orientée vers l'extérieur d'un premier diélectrique plat, la contre-électrode se trouvant sur la face opposée de ce même diélectrique, un second diélectrique, doté d'une constante diélectrique ou permittivité relative inférieure à celle du verre, étant disposé entre l'élément d'antenne et la face externe du vitrage **caractérisé en ce que** le second diélectrique est une couche d'un gaz tel que l'air séparant l'élément d'antenne (7, 27, 47) de la face orientée vers l'intérieur (5, 25, 42) d'une feuile de verre (2, 22, 41) formant au moins une partie du vitrage antenne.

2. Vitrage antenne selon la revendication 1, **caractérisé en ce qu'**il est constitué d'au moins deux feuilles de verre jointes au moyen d'une feuille thermoplastique, et **en ce que** la couche de gaz est formée par une région évidée (4, 24) dans la feuille thermoplastique (3, 23).

3. Vitrage antenne selon la revendication 2, **caractérisé en ce que** l'élément d'antenne (7), est à l'intérieur de la région évidée (4) de la feuille thermoplastique (3), et **en ce qu'**il est placé sur la face (6) orientée vers l'extérieur de la feuille de verre inteme (1).

4. Vitrage antenne selon la revendication 2, **caractérisé en ce que** l'élément d'antenne (27) est placé sur la face (28) orientée vers l'intérieur de la feuille de verre interne (21).

5. Vitrage antenne selon la revendication 1 ou 2, **caractérisé en ce que** la couche de gaz (46) est formée entre l'élément d'antenne (47) et la face intérieure (42) de la feuille de verre interne (41) au moyen d'un espaceur (43).

6. Vitrage antenne selon la revendication 5, **caractérisé en ce que** l'espaceur (43), présente une section en U et est joint à la feuille de verre (41) au moyen d'un adhésif (45), et **en ce que** la structure d'antenne, comportant un élément d'antenne (47), un diélectrique (50) et une contre-électrode (49), est placée sur la face (48) de l'espaceur (43), orientée vers la feuille de verre (41).

7. Vitrage antenne selon l'une des revendications 1 à 6, **caractérisé en ce que** la couche de gaz est remplie d'une mousse constituée d'au moins 95% d'air, ou d'un autre gaz.

8. Procédé de fabrication d'un vitrage antenne composé d'au moins deux feuilles de verre assemblées au moyen d'une feuille thermoplastique par échauffement et pression, d'une structure d'antenne comportant un élément d'antenne et une contre-électrode, **caractérisé en ce qu'**une région de la feuille thermoplastique est évidée, avant l'assemblage de celle-ci avec les feuilles de verre, dans la zone de la structure d'antenne et **en ce qu'**un trou est percé dans la zone recouvrant la région évidée, au travers d'au moins une des feuilles de verre, avant l'assemblage de la feuille thermoplastique et de ces mêmes feuilles.

## Patentansprüche

1. Antennenscheibe mit einem Antennenelement und einer mit Masse verbundenen Gegenelektrode, wobei sich das Antennenelement in der Struktur der Antennenscheibe auf der nach außen gewandten Oberfläche eines flächigen ersten Dielektrikums und die Gegenelektrode sich auf der gegenüberliegenden Oberfläche desselben Dielektrikums befindet, und wobei ein zweites Dielektrikum mit einer geringeren Dielektrizitätskonstante oder Permittivität als der von Glas zwischen dem Antennenelement und der äußeren Oberfläche der Antennenscheibe angeordnet ist,
**dadurch gekennzeichnet**, daß das zweite Dielektrikum eine Gasschicht, insbesondere eine Luftschicht ist, welche das Antennenelement (7;27;47) von der nach innen orientierten Oberfläche (5;25;42) einer wenigstens einen Teil der Antennenscheibe bildenden Glasscheibe (2;22;41) trennt.

2. Antennenscheibe nach Anspruch 1, **dadurch gekennzeichnet**, daß sie aus wenigstens zwei durch eine thermoplastische Folie miteinander verbundenen Glasscheiben gebildet ist und daß die Gasschicht durch einen ausgehöhlten Bereich (4;24) der thermoplastischen Folie (3;23) gebildet wird.

3. Antennenscheibe nach Anspruch 2, **dadurch gekennzeichnet**, daß das Antennenelement (7) innerhalb des ausgehöhlten Bereichs (4) der thermoplastischen Folie (3) auf der nach außen weisenden Oberfläche (6) der inneren Glasscheibe (1) angeordnet ist.

4. Antennenscheibe nach Anspruch 2, **dadurch gekennzeichnet**, daß das Antennenelement (27) auf der nach innen weisenden Oberfläche (28) der inneren Glasscheibe (21) angeordnet ist.

5. Antennenscheibe nach Anspruch 1 oder 2, **dadurch gekennzeichnet**, daß der die Gasschicht (46) zwischen dem Antennenelement (47) und der inneren Oberfläche (42) der inneren Glasscheibe (41) durch einen Abstandshalter (43) gebildet ist.

6. Antennenscheibe nach Anspruch 5, **dadurch gekennzeichnet**, daß der Abstandshalter (43) einen U-förmigen Querschnitt aufweist und durch einen Kleber (45) mit der Glasscheibe (41) verbunden ist, und daß die das Antennenelement (47), ein Dielektrikum (50) und die Gegenelektrode (49) umfassende Antennenstruktur auf der zur Glasscheibe (41) orientierten Seite (48) des Abstandshalters (43) angeordnet ist.

7. Antennenscheibe nach einem der Ansprüche 1 bis 6, dadurch gekennzeichnet, daß die Gasschicht mit einem zu mindestens 95 Vol.-% aus Luft oder einem anderen Gas bestehenden Schaummaterial gefüllt ist.

8. Verfahren zur Herstellung einer Antennenscheibe aus mindestens zwei mittels einer thermoplastischen Folie durch Anwendung von Wärme und Druck verbundenen Einzelglasscheiben und einer ein Antennenelement und eine Gegenelektrode aufweisenden Antennenstruktur, **dadurch gekennzeichnet**, daß ein Bereich der thermoplastischen Folie vor deren Zusammenlegen mit den Einzelglasscheiben im Bereich der Antennenstruktur ausgehöhlt wird, und daß vor dem Verbinden der thermoplastischen Folie mit den Glasscheiben in wenigstens eine dieser Glasscheiben ein Loch in den den ausgehöhlten Bereich überdeckenden Bereich der Glasscheibe gebohrt wird.

## Claims

1. Antenna glazing comprising an antenna element and a counterelectrode connected to earth, the antenna element being placed, in the glazing structure, on the face oriented towards the outside of a first flat dielectric, the counterelectrode being located on the opposite face of said same dielectric, a second dielectric, having a dielectric constant or relative permittivity lower than that of glass, being positioned between the antenna element and the outer face of the glazing, characterized in that the second dielectric is a layer of a gas such as air separating the antenna element (7, 27, 47) from the face oriented towards the inside (5, 25, 42) of a glass sheet (2, 22, 41) forming at least part of the antenna glazing.

2. Antenna glazing according to claim 1, characterized in that it is constituted by at least two glass sheets joined by means of a thermoplastic sheet and in that the gas layer is formed by a hollowed out region (4, 24) in the thermoplastic sheet (3, 23).

3. Antenna glazing according to claim 2, characterized in that the antenna element (7) is on the interior of the hollowed out region (4) of the thermoplastic sheet (3) and is placed on the face (6) oriented towards the outside of the inner glass sheet (1).

4. Antenna glazing according to claim 2, characterized in that the antenna element (7) is placed on the face (28) oriented towards the inside of the inner glass sheet (21).

5. Antenna glazing according to claim 1 or 2, characterized in that the gas layer (46) is formed between the antenna element (47) and the inner face (42) of the inner glass sheet (41) by means of a spacer (43).

6. Antenna glazing according to claim 5, characterized in that the spacer (43) has a U-shaped cross-section and is joined to the glass sheet (41) by means of an adhesive (45) and in that the antenna structure, comprising an antenna element (47), a dielectric (50) and a counterelectric (49), is placed on the face (48) of the spacer (43) oriented towards the glass sheet (41).

7. Antenna glazing according to one of the claims 1 to 6, characterized in that the gas layer is filled with a foam constituted by at least 95% air or some other gas.

8. Process for the production of an antenna glazing comprising at least two glass sheets assembled by means of a thermoplastic sheet by heating and pressure, of an antenna structure incorporating an antenna element and a counterelectrode, characterized in that one region of the thermoplastic sheet is hollowed out prior to its assembly with the glass sheets, in the antenna structure zone and in that a hole is made in the zone covering the hollowed out region, through at least one of the glass sheets, prior to the assembly of the thermoplastic sheet and said glass sheets.
